# EUROPEAN PATENT APPLICATION

(11) **EP 2 395 434 A1**
(43) Date of publication of application: **14.12.2011**
(21) Application number: 10738386.1
(22) Date of filing: 05.01.2010
(51) Int. Cl.: G06F 13/00, H04M 1/00

(54) **MOBILE TERMINAL, MAIL RETURN METHOD, AND SERVER**

(30) Priority: 09.02.2009 JP 2009027395
(71) Applicant: NTT DOCOMO, INC., Chiyoda-ku Tokyo 100-6150 (JP)
(72) Inventor: MORINAGA, Yasuo, Tokyo 100-6150 (JP); OTA, Manabu, Tokyo 100-6150 (JP)
(74) Representative: Beder, Jens
(86) International application number: PCT/JP2010/050023
(87) International publication number: WO 2010/090047

(57) **Abstract**

The present invention can reduce anxiety or discomfort of a sender of a mail, even when a user of a mobile terminal having received the mail is unaware of being in a state that sending a reply mail is impossible. A mobile terminal according to the present invention includes: transmitting and receiving unit for receiving an incoming mail from a transmitter; state determining unit for acquiring information indicating a state of a user and determining based on the information indicating the state of the user whether sending a reply mail is possible or not when the mail transmitting and receiving unit receives the incoming mail; mail creating unit for creating a reply mail with a given content when the state determining unit determines that sending a reply mail is impossible; and mail transmitting unit for transmitting the reply mail created by the mail creating unit to the transmitter. With this configuration, it is determined based on the state of the user at the time of receiving a mail whether sending a reply mail is possible or not and when sending a reply mail is determined to be impossible, a mail with a given content can be automatically sent to the transmitter.

## Description

### Technical Field

The present invention relates to a mobile terminal, a mail return method and a server.

### Background Art

In recent years, communication by transmitting and receiving mails with a mobile terminal has become popular and a recipient of the mail has been increasingly demanded to quick reply. For example, Patent Literature 1 describes a mobile terminal that automatically replies when an incoming mail is received in order to reduce anxiety or discomfort that a mail sender might have because of the delayed reply. That is, in the case that sending a reply is expected to be impossible when an incoming mail is received, the user sets a given mode to the mobile terminal, enabling to automatically send a reply mail with a given text to the incoming mail.

### Citation List

### Patent Literature

Patent Literature 1: Japanese Patent Application Laid-Open Publication No. 2004-206627

### Summary of Invention

### Technical Problem

However, there is a case that the user of the mobile terminal is unaware of being in a state that sending a reply mail is impossible. In that case, it is impossible to perform given operation such as setting a mode to the mobile terminal, so sending no reply mail makes the mail sender feel anxiety or discomfort.

The present invention has been made in view of those problems and aims to provide a mobile terminal capable of reducing anxiety or discomfort of the mail sender, even when the user of the mobile terminal having received a mail is unaware of being in a state that sending a reply mail is impossible, a return mail method and a server.

### Solution to Problem

In order to solve the problems described above, a mobile terminal of the present invention includes: mail receiving means for receiving an incoming mail from a transmitter; state determining means for acquiring information indicating a state of a user and determining based on the information indicating the state of the user whether sending a reply mail is possible or not when the mail receiving means receives the incoming mail; mail creating means for creating a reply mail with a given content when the state determining means determines that sending a reply mail is impossible; and mail transmitting means for transmitting the reply mail created by the mail creating means to the transmitter.

Furthermore, in order to solve the problems described above, a mail return method with a mobile terminal according to the present invention includes the steps of: a mail receiving step of receiving an incoming mail from a transmitter; a state determining step of acquiring information indicating a state of a user and determining based on the information indicating the state of the user whether sending a reply mail is possible or not when the incoming mail is received at the mail receiving step; a mail creating step of creating a reply mail with a given content when sending a reply mail is determined to be impossible at the state determining step; and a mail transmitting step of transmitting the reply mail created at the mail creating step to the transmitter.

In the mobile terminal and the return mail method according to the present invention, it is determined based on the state of the user at the time of receiving the incoming mail whether sending a reply mail is possible or not and when sending a reply mail is determined to be impossible, it is possible to send a reply mail with a given content automatically to the transmitter. Accordingly, even when the user of the mobile terminal is unaware of being in a state that sending a reply mail is impossible, it is possible to reduce anxiety or discomfort of the mail sender.

Furthermore, in the mobile terminal of the present invention, the state determining means may acquire at least one of a state of the mobile terminal and schedule information of the user of the mobile terminal as the information indicating the state of the user. In that case, it is possible to appropriately determine whether the user is in a state where sending a reply mail is possible or not.

Furthermore, the mobile terminal of the present invention may include mail sentence storing means for storing a mail sentence in association with the information indicating the state of the user, and the mail creating means may acquire the mail sentence associated with the information indicating the state of the user acquired by the state determining means and creates the reply mail. In that case, the mail sentence associated with the state of the user is stored in advance, so it is possible to send the reply mail with an appropriate content corresponding to the state of the user.

Furthermore, with the mobile terminal of the present invention, the state determining means may acquire an activated state of application or a talking state as the state of the mobile terminal and determine, when the application is activated or talking on the phone is under way, that sending a reply mail is impossible. When the application is activated or talking on the phone is under way in the mobile terminal, it is impossible to perform operation for creating a mail or for sending a reply mail. Accordingly, it is possible to more appropriately determine that sending a reply mail is impossible.

Furthermore, the mobile terminal of the present invention may include positional information acquiring means for acquiring positional information indicating a present location of the mobile terminal and the mail creating means may add the positional information acquired by the positional information acquiring means to the reply mail. In that case, specific information such as the user's present location can be provided to the mail sender, so it is possible to further reduce anxiety or discomfort of the mail sender.

Furthermore, in order to solve the problems described above, a server of the present invention includes: mail receiving means for receiving an incoming mail from a transmitter; state determining means for acquiring at least one of information indicating whether a mobile terminal that is a destination of the incoming mail is in an area where communication is possible or not and information indicating a state of a user of the mobile terminal and for determining based on the acquired information indicating whether sending a reply mail is possible or not when the mail receiving means receives the incoming mail; mail creating means for creating a reply mail with a given content when the state determining means determines that sending a reply mail is impossible; and mail transmitting means for transmitting the reply mail created by the mail creating means to the transmitter.

In the server of the present invention, when the incoming mail is received, it is determined based on a state such as whether the mobile terminal that is a destination of the incoming mail is in an area where communication is possible or not and a state of the user of the mobile terminal whether sending a reply mail is possible or not and when sending a reply mail is determined to be impossible, a reply mail with a given content can be automatically sent to the transmitter. Accordingly, even when the user of the mobile terminal is unaware of being in a state that sending a reply mail is impossible, it is possible to reduce anxiety or discomfort of the mail sender.

### Advantageous Effects of Invention

In the mobile terminal, the return mail method and the server according to the present invention, it is determined based on the state of the user at the time of receiving a mail whether sending a reply mail is possible or not and, when sending a reply mail is determined to be impossible, a mail with a given content can be automatically sent to the transmitter. Accordingly, even when the user of the mobile terminal is unaware of being in a state that sending a reply mail is impossible, it is possible to reduce anxiety or discomfort of a mail sender.

### Brief Description of Drawings

[FIG 1] FIG 1 is a functional block diagram of a mobile terminal.
[FIG 2] FIG 2 is a hardware block diagram of the mobile terminal.
[FIG 3] FIG 3 is a diagram illustrating an exemplary configuration of a schedule retaining unit.
[FIG 4] FIG 4 is a diagram illustrating an exemplary configuration of a mail sentence storing unit.
[FIG 5] FIG 5 is a flowchart illustrating a processing content performed by the mobile terminal in a method for sending a reply to mail.
[FIG 6] FIG 6 is a functional block diagram of a server.

### Reference Signs List

1... mobile terminal, 2... network, 3... server, 10... transmitting and receiving unit, 11... state determining unit, 12... terminal state retaining unit, 13... schedule retaining unit, 14... positional information acquiring unit, 15... moving state determining unit, 16... mail creating unit, 17... mail sentence storing unit, 18... mail transmitting unit, 30... transmitting and receiving unit, 31... state determining unit, 32... terminal state retaining unit, 36... mail creating unit, 37... mail sentence storing unit, 38... mail transmitting unit

### Description of Embodiments

With reference to drawings, a mobile terminal according to the present embodiment will be described. It should be noted that the same unit is given the same reference sign and redundant explanation is omitted.

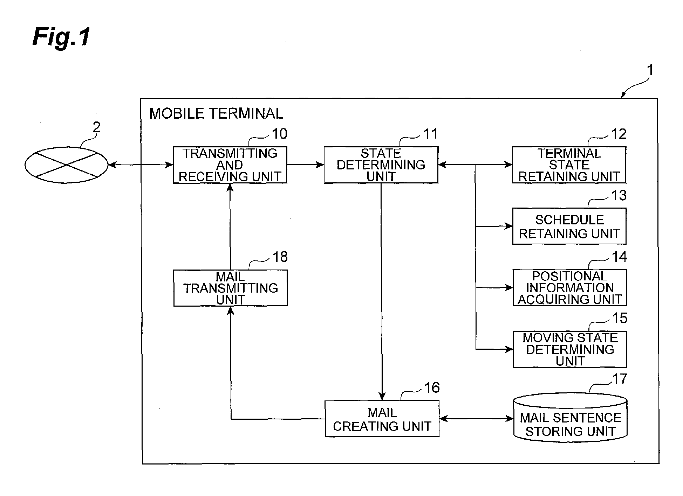

FIG. 1 is a functional block diagram illustrating a functional configuration of a mobile terminal 1 according to the present embodiment. The mobile terminal 1 is capable of transmitting and receiving mail through a network 2 with another apparatus and is configured, for example, by an apparatus such as a cellular phone. The mobile terminal 1 has a transmitting and receiving unit 10 (mail receiving means), a state determining unit 11 (state determining means), a terminal state retaining unit 12, a schedule retaining unit 13, a positional information acquiring unit 14 (positional information acquiring means), a moving state determining unit 15, a mail creating unit 16 (mail creating means), a mail sentence storing unit 17 (mail sentence storing means) and a mail transmitting unit 18 (mail transmitting means).

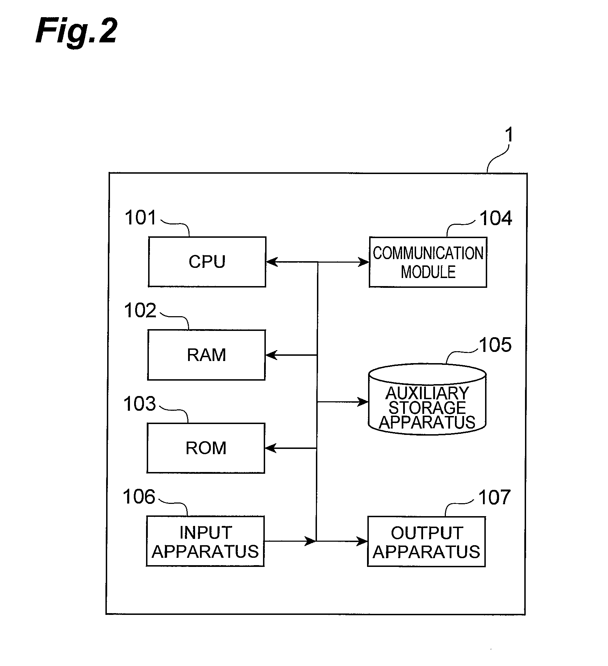

FIG. 2 is a hardware block diagram of the mobile terminal 1. As shown in FIG. 2, the mobile terminal 1 is physically configured as a computer system including a CPU 101, a RAM 102 and a ROM 103 that serve as a main storage apparatus; a communication module 104 that is a device for transmitting and receiving data through a wireless communication network, an auxiliary storage apparatus 105 such as a hard disk, a flash memory or the like; an input apparatus 106 serving as an input device such as a keyboard or the like, and an output apparatus 107 such as a display or the like. Each function illustrated in FIG. 1 is realized by causing a given computer software to be read in hardware such as the CPU 101, the RAM 102 or the like illustrated in FIG. 2 and thereby causing the communication module 104, the input apparatus 106 and the output apparatus 107 to operate under control of the CPU 101, as well as, by reading or writing data in the RAM 102 and the auxiliary storage apparatus 105. With reference to FIG. 1, each functional element of the mobile terminal 1 will be described below.

The transmitting and receiving unit 10 is a unit for receiving a mail transmitted from an apparatus as a transmitter through the network 2. Upon receiving the mail, the transmitting and receiving unit 10 notifies the state determining unit 11 of the fact that the mail has been received.

Upon receiving notice to the effect of receiving the mail from the transmitting and receiving unit 10, the state determining unit 11 acquires information indicating a state of a user of the mobile terminal 1 from the terminal state retaining unit 12, the schedule retaining unit 13, the positional information acquiring unit 14, the moving state determining unit 15 and the like. The information indicating the state of the user is information to be used for determining whether the user of the mobile terminal is able to send a reply to an incoming mail or not. The state determining unit 11 determines based on the information indicating the state of the user whether sending a reply to the incoming mail is possible or not and transmits a determination result and the information indicating the state of the user to the mail creating unit 16. Detailed explanation about determination whether sending a reply to the mail is possible or not will be given below.

The terminal state retaining unit 12 is a unit for retaining a state of the mobile terminal 1. The state of the mobile terminal 1 retained in the terminal state retaining unit 12 is acquired by the state determining unit 11 to be used as the information indicating the state of the user. The terminal state retaining unit 12 retains, as the state of the mobile terminal 1, a state of activated application, a state of talking on the phone and the like, for example.

When determining based on the information acquired from the terminal state retaining unit 12 that application is activated or talking on the phone is under way in the mobile terminal 1, the state determining unit 11 determines that sending a reply mail is impossible because operation for creating a mail or for sending a reply mail is impossible.

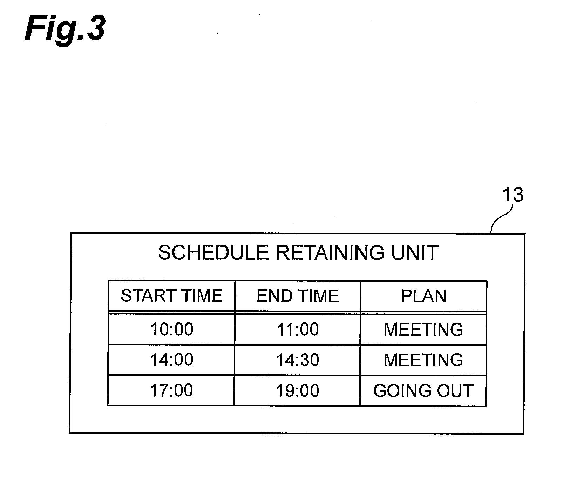

The schedule retaining unit 13 is a unit for retaining schedule information of the user of the mobile terminal 1. The schedule information retained in the schedule retaining unit 13 is acquired by the state determining unit 11 and is to be used as the information indicating the state of the user. FIG. 3 is a diagram illustrating an exemplary configuration of the schedule retaining unit 13. As illustrated in FIG. 3, a start time, an end time and a plan are stored as the schedule information, while being connected to each other. The schedule information stored in the schedule retaining unit 13 is registered in advance by the user, for example.

When receiving a mail, the state determining unit 11 refers to the schedule retaining unit 13 and determines that sending a reply mail is impossible when any schedule information is registered at the time of receiving the mail. It should be noted that the schedule retaining unit 13 is configured inside the mobile terminal 1 in the present embodiment but may be configured in another apparatus capable of communicating thereto through the network 2.

The positional information acquiring unit 14 is a unit for acquiring positional information on a present location of the mobile terminal 1 and is configured by a global positioning system apparatus, for example. In that case, the positional information is acquired as latitude and longitude information. Furthermore, the positional information acquiring unit 14 includes map information and is capable of acquiring information such as what kind of facility the mobile terminal 1 is in based on the latitude and longitude information. The information on the facility where the mobile terminal 1 is in is acquired by the state determining unit 11 to be used as the information indicating the state of the user. It should be noted that the positional information acquiring unit 14 may acquire information on a base station that the mobile terminal 1 belongs to as the positional information.

The state determining unit 11 stores, for example, a facility name in association with attribute information indicating whether terminal use in the facility is allowed or not and extracts, based on the information on the facility acquired from the positional information acquiring unit 14, the attribute information indicating whether the terminal use in the facility is allowed or not. When the terminal use in the facility is allowed, the state determining unit 11 determines that sending a reply mail is impossible.

The moving state determining unit 15 is a unit for determining a moving state such as a moving speed or acceleration of the mobile terminal 1 and is configured by an apparatus such as an acceleration sensor or a geomagnetic sensor, for example. The information on the moving state determined by the moving state determining unit 15 is acquired by the state determining unit 11 to be used as the information indicating the state of the user.

When determining based on the information on the moving state acquired from the moving state determining unit 15 that the mobile terminal 1 is moving at a speed faster than a given speed, for example, the state determining unit 11 determines that the user of the mobile terminal 1 is in motion so that sending a reply mail is impossible.

The mail creating unit 16 is a unit for creating a reply mail with a given content to reply to a transmitter of the incoming mail when the state determining unit 11 determines that sending a reply mail is impossible. A mail sentence of the reply mail created here may be a simple one such as "sending a reply is impossible" but preferably includes more detailed information. The mail creating unit 16 transmits the created reply mail to the mail transmitting unit 18.

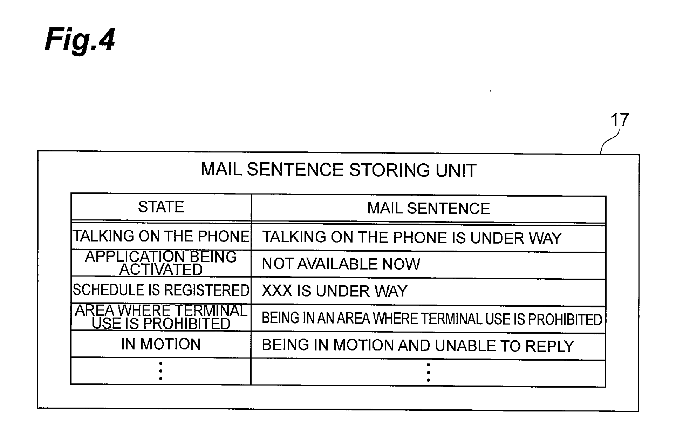

The mail sentence storing unit 17 is means for storing the mail sentence in association with the information indicating the state of the user. In the mail sentence storing unit 17, the mail creating unit 16 acquires the mail sentence associated with the information indicating the state of the user acquired from the state determining unit 11 and creates the reply mail. FIG 4 is a diagram illustrating an exemplary configuration of the mail sentence storing unit 17. When the state of the user acquired from the state determining unit 11 is "talking on the phone", for example, the mail creating unit 16 acquires the mail sentence associated with a state "talking on the phone", that is "talking on the phone is under way" from the mail sentence storing unit 17.

Furthermore, when the state determining unit 11 determines that schedule information is registered at the time of receiving a mail and a plan in the schedule information that the state determining unit 11 acquires from the schedule retaining unit 13 is a "meeting", the mail creating unit 16 acquires in the mail sentence storing unit 17 the mail sentence associated with a state "schedule is registered", that is "XXX is under way" and allocates "meeting" of the plan in the schedule information to "XXX" of the mail sentence to create the mail sentence, such as "meeting is under way". Furthermore, the mail creating unit 16 is capable of acquiring the positional information acquired by the positional information acquiring unit 14 via the state determining unit 11 to add to the mail sentence.

The mail transmitting unit 18 transmits through the transmitting and receiving unit 10 the reply mail acquired from the mail creating unit 16 to the transmitter of the incoming mail.

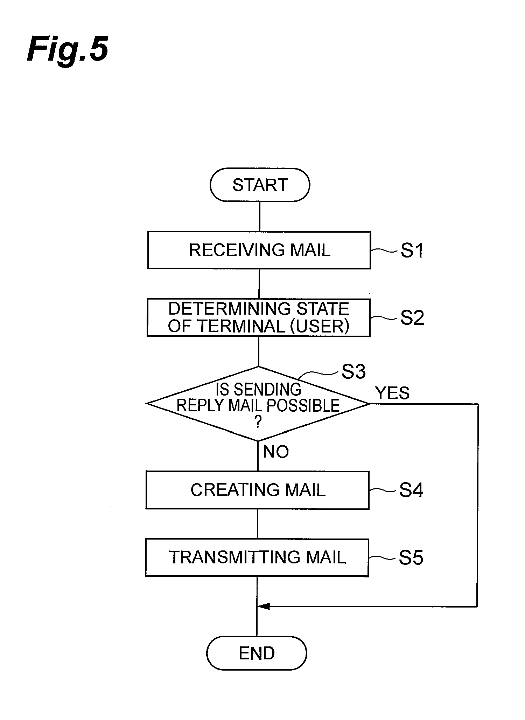

Subsequently, processing procedures that the mobile terminal 1 sends a reply mail to an incoming mail will be described. FIG 5 is a flowchart illustrating a process that the mobile terminal 1 performs in a method for sending a reply mail.

First, the transmitting and receiving unit 10 receives a mail transmitted through the network 2 from an apparatus as a transmitter (S1) and notifies the state determining unit 11 of the fact that the mail has been received.

At step S2, the state determining unit 11 acquires information indicating a state of a user of the mobile terminal 1 and determines whether sending a reply mail to the incoming mail is possible or not (S2). Here, the information indicating the state of the user is acquired by the terminal state retaining unit 12, the schedule retaining unit 13, the positional information acquiring unit 14 and the moving state determining unit 15 and the like.

It should be noted that before acquiring the information indicating the state of the user (S2), the state determining unit 11 may refer to a setting whether automatically sending a reply mail or not and determine whether to automatically send a reply or not. The setting whether automatically to send a reply mail or not may be retained, for example, in the terminal state retaining unit 12. For example, when the user does not desire to automatically send a reply mail, performing a setting according to the desire in the terminal state retaining unit 12 allows the mobile terminal 1 to avoid processing following step S2 to automatically send a reply.

When sending a reply mail is possible, the procedure ends, while when sending a reply mail is impossible, the procedure proceeds to step S4 (S3).

At step S4, the mail creating unit 16 creates a reply mail with a given content to send a reply to the transmitter of the incoming mail and transmits the created reply mail to the mail transmitting unit 18. Creation of the mail is performed by referring to the mail sentence storing unit 17 and extracting a mail sentence based on the information indicating the state of the user acquired by the state determining unit 11.

The mail transmitting unit 18 transmits the reply mail acquired from the mail creating unit 16 through the transmitting and receiving unit 10 to the transmitter of the incoming mail (S5). In this way, the processing according to the method of sending a reply mail in the mobile terminal 1 ends.

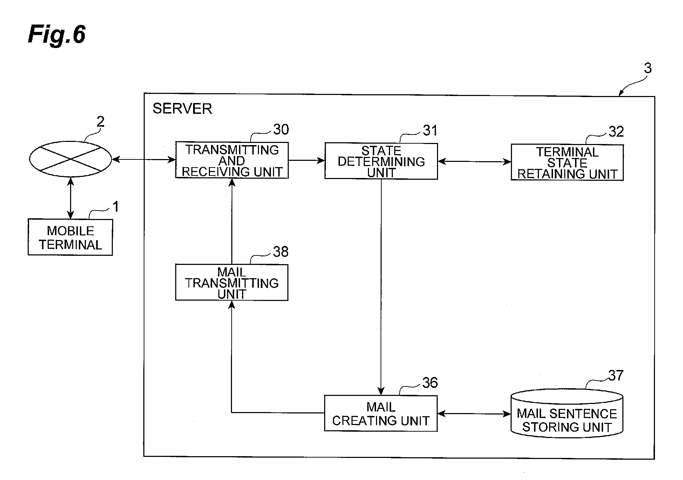

Next, with reference to the drawings a server according to the embodiment of the present invention will be described. FIG. 6 is a functional block diagram illustrating a functional configuration of a server 3 according to the present embodiment. The server 3 is an apparatus for transmitting a mail transmitted from an apparatus (not illustrated) as a transmitter to the mobile terminal 1 and is provided, for example, at a base station in a communication network of the mobile terminal 1. The server 3 has a transmitting and receiving unit 30 (mail receiving means of the server), a state determining unit 31 (state determining means of the server), a terminal state retaining unit 32, a mail creating unit 36 (mail creating means of the server), a mail sentence storing unit 37 and a mail transmitting unit 38 (mail transmitting means of the server). The server 3 includes a configuration physically similar to that of the mobile terminal 1 illustrated in FIG. 2. With reference to FIG. 6, each functional element of the server 3 will be described below.

The transmitting and receiving unit 30 is a unit for receiving the mail transmitted from the apparatus as the transmitter through the network 2. Upon receiving the mail, the transmitting and receiving unit 30 notifies the state determining unit 31 of the fact that the mail has been received.

Upon receiving notice to the effect of receiving the mail from the transmitting and receiving unit 30, the state determining unit 31 acquires at least one of information indicating whether the mobile terminal 1 that is a destination of the incoming mail is in an area where communication is possible or not and information indicating a state of a user of the mobile terminal 1. Here, the information indicating the state of the user is information to be used for determining whether the user of the mobile terminal 1 is able to send a reply to the incoming mail or not. The state determining unit 31 determines, based on at least one of the information indicating whether the mobile terminal 1 is in an area where communication is possible or not and the information indicating the state of the user, whether sending a reply mail is possible or not and transmits a determination result to the mail creating unit 36.

The terminal state retaining unit 32 is a unit for retaining at least one of the information indicating whether the mobile terminal 1 is in the area where communication is possible or not and the information indicating the state of the user. The information of the mobile terminal 1 retained in the terminal state retaining unit 32 is acquired by the state determining unit 31 to be used for determining whether sending a reply mail is possible or not. The state of the mobile terminal 1 includes, for example, a talking state of the mobile terminal 1 or the like.

When the state determining unit 31 determines based on the information acquired from the terminal state retaining unit 32 that the mobile terminal 1 is outside the area where communication is possible or talking on the phone is under way, it is impossible to send a reply mail so that sending a reply mail is determined to be impossible.

The mail creating unit 36 is a unit for creating a reply mail with a given content to reply to the transmitter of the incoming mail when the state determining unit 31 determines that sending a reply mail is impossible.

The mail sentence storing unit 37 is storing means for storing a mail sentence in association with the information on the state of the mobile terminal 1. In the mail sentence storing unit 37, the mail creating unit 36 acquires the mail sentence connected to the information indicating the state of the mobile terminal 1 and creates the reply mail. When the mobile terminal 1 is outside the area where communication is possible, for example, the reply mail including the mail sentence such as "out of service" is created. Then, the mail creating unit 36 transmits the created reply mail to the mail transmitting unit 38. Furthermore, the mail creating unit 36 is capable of acquiring information on a present location of the mobile terminal 1 from a functional unit (not illustrated) that retains the information on the present location of the mobile terminal 1 or from another apparatus (not illustrated) to add to the mail sentence.

The mail transmitting unit 38 transmits the reply mail acquired from the mail creating unit 36 through the transmitting and receiving unit 30 to the transmitter of the incoming mail.

Subsequently, functional effect of the mobile terminal 1 of the present embodiment described above will be described. In the mobile terminal 1 of the present embodiment, it is determined based on the state of the user at the time of receiving a mail whether sending a reply mail is possible or not and when sending a reply mail is determined to be impossible, a mail with a given content can be automatically sent to the transmitter. Accordingly, even when the user of the mobile terminal 1 is unaware of being in a state that sending a reply mail is impossible, it is possible to reduce anxiety or discomfort of a mail sender.

Furthermore, the state determining unit 11 determines whether sending a reply mail is possible or not by using the information indicating the state of the user such as the state of the mobile terminal 1 acquired from the terminal state retaining unit 12, the user's schedule information acquired from the schedule retaining unit 13 or the like, so it is possible to appropriately determine whether or not the user is in a state that sending a reply mail is possible.

Furthermore, the mail creating unit 16 refers to the mail sentence storing unit 17 that stores the mail sentence in association with the information indicating the state of the user and creates a mail based on the information indicating the state of the user acquired from the state determining unit 11, so it is possible to send the mail with an appropriate content corresponding to the state of the user.

Furthermore, the state determining unit 11 acquires an activated state of application or a talking state as the state of the mobile terminal 1 and determines that sending a reply mail is impossible when the application is activated or talking on the phone is under way, so it is possible to more appropriately determine that sending a reply mail is impossible.

Furthermore, the mail creating unit 16 is capable of adding positional information of the mobile terminal 1 acquired from the positional information acquiring unit 14 to the mail, so it is possible to provide a mail sender with more specific information such as the user's present location and to further reduce anxiety or discomfort of the mail sender.

Furthermore, functional effect of the server 3 of the present embodiment as described above will be explained. When receiving an incoming mail, the server 3 determines based on the state, such as whether the mobile terminal that is a destination of the incoming mail is in an area where communication is possible or not and the state of the user of the mobile terminal 1, whether sending a reply mail is possible or not and when sending a reply mail is determined to be impossible, it is possible to automatically send a reply mail with a given content to the transmitter. Accordingly, even when the user of the mobile terminal 1 is unaware of being in a state that sending a reply mail is impossible, it is possible to reduce anxiety or discomfort of the mail sender.

### Industrial Applicability

The present invention enables to reduce anxiety or discomfort of a sender of a mail, even when a user of a mobile terminal having received the mail is unaware of being in a state that sending a reply mail is impossible.

## Claims

1. A mobile terminal comprising:
mail receiving means for receiving an incoming mail from a transmitter;
state determining means for acquiring information indicating a state of a user and determining based on the information indicating the state of the user whether sending a reply mail is possible or not when the mail receiving means receives the incoming mail;
mail creating means for creating a reply mail with a given content when the state determining means determines that sending a reply mail is impossible; and
mail transmitting means for transmitting the reply mail created by the mail creating means to the transmitter.

2. The mobile terminal according to claim 1, wherein the state determining means acquires at least one of a state of the mobile terminal and schedule information of the user of the mobile terminal as the information indicating the state of the user.

3. The mobile terminal according to claim 1 or 2, further comprising mail sentence storing means for storing a mail sentence in association with the information indicating the state of the user, wherein
the mail creating means acquires the mail sentence associated with the information indicating the state of the user acquired by the state determining means and creates the reply mail.

4. The mobile terminal according to claim 2 or 3, wherein the state determining means acquires an activated state of application or a talking state as the state of the mobile terminal and determines, when the application is activated or talking on the phone is under way, that sending a reply mail is impossible.

5. The mobile terminal according to any one of claims 1 to 4, further comprising positional information acquiring means for acquiring positional information indicating a present location of the mobile terminal, wherein
the mail creating means adds the positional information acquired by the positional information acquiring means to the reply mail.

6. A mail return method performed with a mobile terminal, the mail return method comprising the steps of:
a mail receiving step of receiving an incoming mail from a transmitter;
a state determining step of acquiring information indicating a state of a user and determining based on the information indicating the state of the user whether sending a reply mail is possible or not when the incoming mail is received at the mail receiving step;
a mail creating step of creating a reply mail with a given content when sending a reply mail is determined to be impossible at the state determining step; and
a mail transmitting step of transmitting the reply mail created at the mail creating step to the transmitter.

7. A server comprising:
mail receiving means for receiving an incoming mail from a transmitter;
state determining means for acquiring at least one of information indicating whether a mobile terminal that is a destination of the incoming mail is in an area where communication is possible or not and information indicating a state of a user of the mobile terminal and for determining based on the acquired information indicating whether sending a reply mail is possible or not when the mail receiving means receives the incoming mail;
mail creating means for creating a reply mail with a given content when the state determining means determines that sending a reply mail is impossible; and
mail transmitting means for transmitting the reply mail created by the mail creating means to the transmitter.
